# EUROPÄISCHE PATENTSCHRIFT

(11) **EP 1 383 684 B1**
(45) Veröffentlichungstag und Bekanntmachung des Hinweises auf die Patenterteilung: **17.11.2004**
(21) Anmeldenummer: 02766646.0
(22) Anmeldetag: 02.05.2002
(51) Int. Cl.: B65D 5/74, B29C 45/14, B29C 45/16

(54) **VERFAHREN ZUR HERSTELLUNG EINES WIEDERVERSCHLIESSBAREN AUSGIESSELEMENTES UND DANACH HERGESTELLTES AUSGIESSELEMENT**
METHOD FOR PRODUCING A RECLOSABLE SPOUT ELEMENT AND A CORRESPONDINGLY PRODUCED SPOUT ELEMENT
PROCEDE POUR LA PRODUCTION D'UN ELEMENT VERSEUR REFERMABLE ET ELEMENT VERSEUR PRODUIT SELON CE PROCEDE

(30) Priorität: 02.05.2001 DE 10121420
(43) Veröffentlichungstag der Anmeldung: 28.01.2004
(73) Patentinhaber: SIG allCap AG, 8212 Neuhausen (CH)
(72) Erfinder: RUDOLPH, Robert, CH-5430 Wettingen (CH)
(74) Vertreter: COHAUSZ & FLORACK
(86) Internationale Anmeldenummer: PCT/EP2002/004817
(87) Internationale Veröffentlichungsnummer: WO 2002/087982

(56) Entgegenhaltungen:
- WO-A-00/37329
- WO-A-97/41040
- DE-A- 19 805 030
- US-A- 3 000 049
- US-A- 4 462 504
- US-A- 5 381 935

## Beschreibung

Die Erfindung betrifft ein Verfahren zur Herstellung eines zweiteiligen, wiederverschließbaren Ausgießelements für eine Flüssigkeitspackung, insbesondere Flachgiebelverbundpackung, wobei das Ausgießelement einen Grundkörper und einen Verschlussdeckel aufweist, und wobei der Verschlussdeckel mittels zweier Lagerzapfen gelenkig am Grundkörper angelenkt ist und eine Öffnung zur Aufnahme eines Originalitätsverschlusses aufweist, und wobei der Verschlussdeckel zum Öffnen der Packung in das Packungsmaterial hinein schwenkbar ist sowie ein danach hergestelltes Ausgießelement.

Wiederverschließbare Ausgießelemente für quaderförmige Flachgiebelverbundpackungen sind in vielfacher Ausfertigung bekannt. Sie finden vornehmlich im Zusammenhang mit Flüssigkeitsverpackungen mit Kalt-, Kalt-Steril-, Heiß- und Aseptik-Füllung Verwendung.

Es ist bei Flachgiebelverbundpackungen der zuvor genannten Art bereits vorgeschlagen worden, im Packungsgiebel ein Ausgießelement anzuordnen, welches mit einem Grundkörper und einem entsprechenden Verschlussdeckel ausgestattet ist und mit dem die Packung gleichzeitig vor dem ersten Gebrauch geöffnet wird (DE 198 05 030 Al). Dabei ist im Bereich der äußeren PE-Schicht und Kartonschicht eine Schwächungslinie zur Schwächung des Giebelmaterials vorgesehen, in die zum Öffnen der Packung ein mit dem Grundkörper gelenkig verbundener und der Form der Schwächungslinie entsprechender Verschlussdeckel in das Packungsmaterial hineingeschwenkt wird. Zum Wiederverschließen der Packung wird der als Hebel ausgebildete Verschlussdeckel wieder in seine Ausgangslage zurück geschwenkt.

Nachteilig an diesem bekannten wiederverschließbaren Ausgießelement ist die aufwendige Fertigung: Grundkörper und Verschlussdeckel werden einzeln im . Spritzgießverfahren hergestellt und der Verschlussdeckel mit seinen seitlichen Lagerzapfen von unten in den Grundkörper eingeklemmt. Anschließend muss das Ausgießelement geschlossen werden und schließlich noch der Originalitätsverschluss durch formschlüssiges Verformen fertiggestellt werden. Dies ist zeit- und kostenaufwendig und es ist durch die Herstellungsart bedingt, dass die Ausnehmungen für die Aufnahme der Lagerzapfen durch das Passieren der Lagerzapfen beim Hineindrücken des Verschlussdeckels in den Grundkörper verformt werden können, so dass die Funktionsfähigkeit insbesondere hinsichtlich der Dichtigkeit beim Wiederverschließen der angebrochenen Packung beeinträchtigt wird.

Der vorliegenden Erfindung liegt daher die Aufgabe zugrunde, das bekannte und zuvor näher beschriebene Verfahren zur Herstellung eines wiederverschließbaren Ausgießelements in seiner Gesamtheit zu verbessern und zu vereinfachen. Weiterhin ist beim so hergestellten Ausgießelement insbesondere eine zuverlässig dichte Verbindung zwischen Grundkörper und Verschlussdeckel erwünscht.

Diese Aufgabe wird bei einem Verfahren gemäß dem Oberbegriff von Anspruch 1 durch die folgenden Schritte gelöst:
- Spritzgießen des Verschlussdeckels aus einem ersten Kunststoff,
- Drehen des Werkzeugs um einen vorgegebenen Winkel und Öffnen wenigstens eines Teils der Werkzeugform des Verschlussdeckels,
- Schließen einer zweiten Werkzeugform für den Grundkörper, deren Kavität wenigstens teilweise auch vom Verschlussdeckel gebildet wird,
- Spritzgießen des Grundkörpers aus einem zweiten Kunststoff, wobei in der Öffnung des Verschlussdeckels eine formschlüssige Verbindung entsteht, welche vom Verschlussdeckel beim erstmaligen Öffnen der Packung nachhaltig verändert wird, und
- Öffnen der zweiten Werkzeugform und Entnahme des fertigen Ausgießelements.

Das nach dem erfindungsgemäßen Verfahren hergestellte Ausgießelement wird in einem einzigen Werkzeug applizierfertig hergestellt und weist herstellungsbedingt eine extrem gute Dichtigkeit auf: Dadurch, dass der Verschlussdeckel zuerst hergestellt wird und der danach Grundkörper beim Erstarren noch minimal schrumpft, wird stets eine zuverlässige Dichtigkeit zwischen beiden Teilen erreicht.

Damit ist sichergestellt, dass auch die bereits einmal geöffnete Packung bei wieder verschlossenem Ausgießelement zum Durchmischen des enthaltenen Produktes geschüttelt werden kann, ohne dass etwas vom Produkt austritt.

Das Herstellen von Ausgießelementen in der sog. Zwei-Komponenten-Technologie ist allgemein bekannt und wurde bereits auch für die Herstellung von wiederverschließbaren Ausgießelementen verwendet. Die US 5,381,935 offenbart ein Ausgießelement mit einem aufklappbaren Verschlusselement, welches auf eine Giebelpackung aufgesiegelt werden kann. Hier wird zunächst der Grundkörper und anschließend der Verschlussdeckel hergestellt. Aus der WO 00/37329 ist ein wiederverschließbares Ausgießelement bekannt, welches, aufgeschraubt auf ein Gewinde eines Behälters, gleichfalls durch Aufklappen eines Verschlusselementes geöffnet werden kann. Auch hier ist bereits ein Originalitätsverschluss vorhanden, welcher nach dem erstmaligen Öffnen des Ausgießelementes verhindert, dass das Verschlusselement in seinen Ausgangszustand gebracht werden kann.

Des weiteren ist aus der US 4,462,504 bereits ein Originalitätsverschluss bekannt, welcher aus mehreren konisch auseinanderlaufenden Federn besteht, welche - nach Zusammenbau des einteilig gespritzten Ausgießelementes - in einer entsprechenden Öffnung angeordnet sind. Diese Art der Herstellung eines Originalitätsverschlusses ist jedoch äußerst aufwendig, da für den Zusammenbau zusätzliche Werkzeuge notwendig sind.

In weiterer Ausgestaltung der Erfindung kann der Verschlussdeckel zwei seitliche Hohlräume aufweisen, in denen beim Spritzen des Grundkörpers die Lagerzapfen in situ entstehen oder ist es alternativ möglich, dass der Verschlussdeckel zwei seitliche Lagerzapfen aufweist, welche beim Spritzen des Grundkörpers von diesem umgeben werden.

Als geeignete Kunststoffe können beispielsweise Polyethylen (PE) und Polypropylen (PP) verwendet werden.

Nach einer weiteren Lehre der Erfindung erweitern sich die Lagerzapfen , zu ihrem freien Ende hin konisch. Es ist jedoch auch denkbar, dass die Lagerzapfen entsprechende Hinterschneidungen aufweisen, um eine formschlüssige (Gelenk-)Verbindung beider Konstruktionsteile zu ermöglichen.

Eine weitere Ausbildung der Erfindung sieht vor, dass der Verschlussdeckel eine Öffnung aufweist, durch welche beim Spritzgießen eine formschlüssige Verbindung entsteht, welche vom Verschlussdeckel beim erstmaligen Öffnen nachhaltig verändert wird. Auf diese Weise entsteht ein Originalitätsverschluss, welcher ermöglicht, dass der Verbraucher einer mit einem solchen wiederverschließbaren Ausgießelement versehenen Flachgiebelpackung unmittelbar ansehen kann, ob diese bereits schon einmal geöffnet worden ist oder nicht. Dies ist aus Gründen der Hygiene, aber auch aus Sicherheitsüberlegungen - vergiftete Lebensmittel mussten in den letzten Jahren leider häufiger festgestellt werden - zu begrüßen.

In bevorzugter Ausgestaltung der Erfindung sind Grundkörper und Verschlussdeckel in Schließstellung durch ein als Haken od. dgl. ausgebildetes Rastelement verrastbar, um ein unbeabsichtigtes öffnen zu vermeiden. Eine spürbare und vorzugsweise auch hörbare Verrastung gibt dem Verbraucher eine erhöhte "Sicherheit" bei der Bedienung.

Auch kann das weiter oben beschriebene Rastelement gleichzeitig den Originalitätsverschluss bilden. Dazu wird beim ersten Öffnen nur ein Teil des Originalitätsverschlusses zerstört und die verbleibende kraftschlüssige Verbindung sorgt für die gewünschte Verrastung beider Teile.

In weiterer Ausgestaltung der Erfindung, weist der Grundkörper wenigstens einen den Bereich seiner Ausgießausöffnung übergreifenden Steg auf. Ein solcher Steg dient nicht nur der Versteifung des Ausgießelementes, sondern wird auch als Anschlag eingesetzt, um die Schwenkbewegung des Verschlussdeckels beim Öffnen der Packung auf einen Winkel von ca. 90° zu begrenzen. Auf diese Weise wird auch einem Verbraucher, der ein solches Ausgießelement noch nie benutzt hat, durch den nach Erreichen des Anschlags auftretenden Widerstand klar, dass der Öffnungsvorgang abgeschlossen ist.

Nachfolgend ist die Erfindung anhand einer lediglich ein bevorzugtes Ausführungsbeispiel darstellenden Zeichnung näher erläutert. In der Zeichnung zeigen
- Fig. 1: ein erfindungsgemäß hergestelltes wiederverschließbares Ausgießelement in perspektivischer Ansicht,
- Fig. 2: das Ausgießelement aus Fig. 1, in geöffneter Stellung im Längsschnitt,
- Fig. 3: das Ausgießelement aus Fig. 1 in Seitenansicht,
- Fig. 4: einen Grundkörper des erfindungsgemäßen Ausgießelementes in Draufsicht,
- Fig. 5: das Ausgießelement aus Fig. 1 in Vorderansicht,
- Fig. 6: das Ausgießelement aus Fig. 1 im Schnitt entlang der Linie VI-VI,
- Fig. 7: ein erstes Ausführungsbeispiel eines Originalitätsverschlusses, appliziert auf den Grundkörper, ohne Verschlussdeckel,
- Fig. 8 und 9: den Originalitätsverschluss aus Fig. 7 im Querschnitt durch Grundkörper und Verschlussdeckel vor und nach der Betätigung des Verschlussdeckels und
- Fig. 10: ein weiteres Ausführungsbeispiel eines Originalitätsverschlusses.

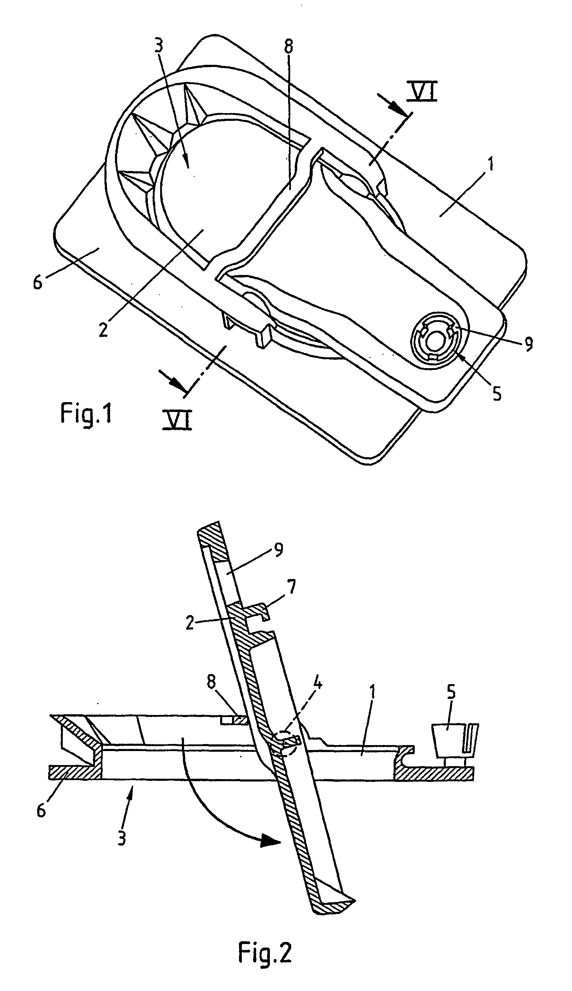

In Fig. 1 ist das erfindungsgemäße Ausgießelement perspektivisch in Draufsicht dargestellt. Das Ausgießelement weist einen auf eine nicht dargestellte Flachgiebelpackung zu applizierenden Grundkörper 1 und einen Verschlussdeckel 2 zum Durchstoßen der Packungswandung in einer vorbereiteten Schwächungszone der Packung und anschließendem Wiederverschließen des Ausgießelementes auf.

Wie insbesondere aus Fig. 2 hervorgeht, ist der Verschlussdeckel 2 um eine als Linie VI-VI bezeichnete Achse schwenkbar im Grundkörper 1 des Ausgießelementes angelenkt, um eine Gießöffnung 3 freizugeben. Die Lagerung des Verschlussdeckels 2 im Grundkörper 1 des erfindungsgemäßen Ausgießelementes zeichnet sich dadurch aus, daß die seitlichen Lagerzapfen 4 von Beginn der Herstellung des Grundkörpers 1 an in entsprechende Ausnehmungen im Verschlussdeckel 2 eingreifen und so ein Schwenkgelenk bilden. Die Schwenkbewegung geht deutlich aus Fig. 2 hervor, in der das erfindungsgemäß hergestellte Ausgießelement mit geöffnetem Verschlussdeckel 2 im Längsschnitt dargestellt ist.

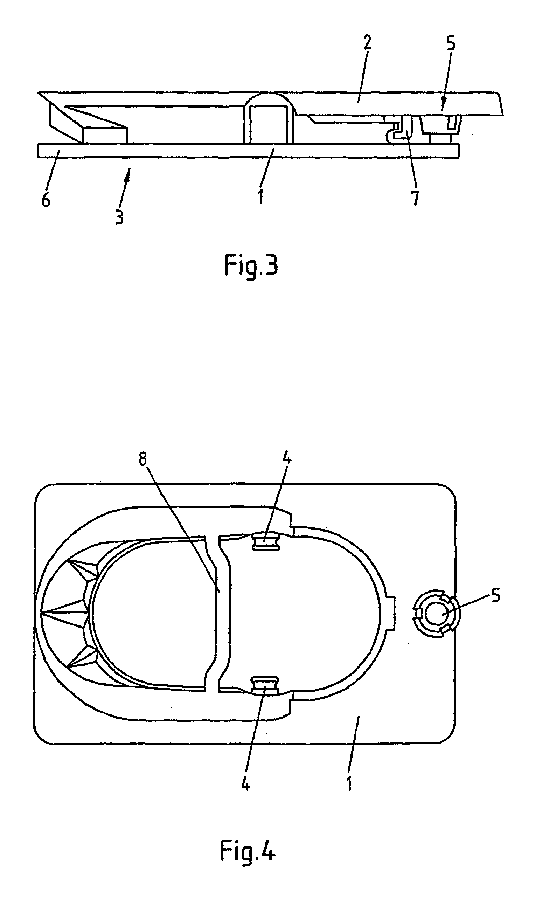

Ferner ist in Fig. 1 ein Originalitätsverschluss 5 erkennbar, der nachfolgend noch detailliert beschrieben wird. Der Grundkörper 1 weist um die Ausgießöffnung 3 herum einen umlaufenden Flansch 6 auf, der mit der Oberfläche der (nicht dargestellten) Flachgiebelverbundpackung im Bereich der Schwächungszone verbunden wird. Ein Rastelement 7 (in Fig. 3) sorgt für die spürbare (und möglichst hörbare) Verrastung des Verschlussdeckels 2 mit dem Grundkörper 1 nach dem Wiederverschließen. Oberhalb der Gießöffnung 3 ist ein beide Seiten des Grundkörpers 1 verbindender Steg 8 erkennbar, der als Anschlag für den Verschlussdeckel 2 in geöffneter Stellung dient, wie insbesondere aus Fig. 2 deutlich hervorgeht. Gleichzeitig verhindert der Steg 8, dass beim Öffnungsvorgang ein-zur Hilfe genommener Finger durch die Gießöffnung 3 mit dem Produkt in Berührung kommt.

Im dargestellten und insoweit bevorzugten Ausführungsbeispiel ist der Originalitätsverschluss 5 an dem.der Ausgießöffnung 3 entgegengesetzten Ende des Grundkörpers 1 angeordnet. In diesem Bereich weist der Verschlussdeckel 2 eine Öffnung 9 auf, in der beim Spritzgießen eine formschlüssige Verbindung entsteht, welche vom Verschlussdeckel 2 beim erstmaligen Öffnen der Packung dauerhaft verformt wird.

In Fig. 3 ist das erfindungsgemäß hergestellte Ausgießelement in Seitenansicht dargestellt, hier ist eine mögliche Ausgestaltung des Rastelementes 7 und des zuvor schon erwähnten Originalitätsverschlusses 5 erkennbar.

Fig. 4 zeigt den Grundkörper 1 des erfindungsgemäß hergestellten Ausgießelementes in Draufsicht. Hier sind deutlich die beiden Lagerzapfen 4 zu erkennen, welche in entsprechende Hohlräume des - zum besseren Verständnis nicht dargestellten - Verschlussdeckels hinein gespritzt sind.

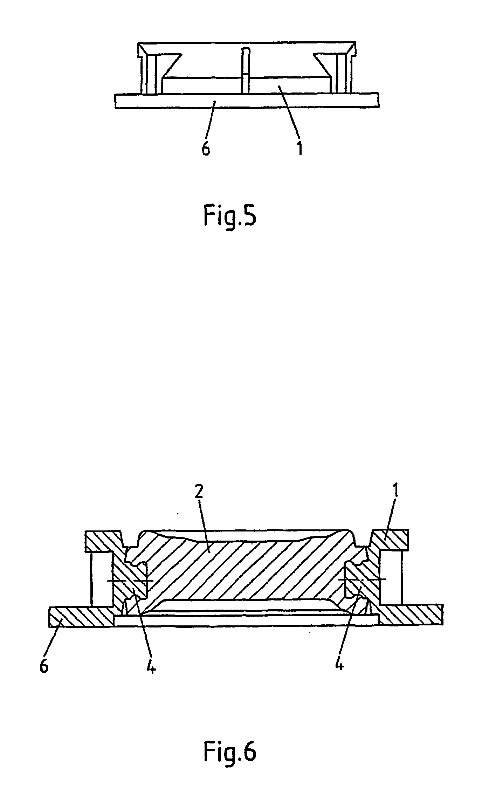

Die Fig. 5 und 6 zeigen das erfindungsgemäß hergestellte Ausgießelement in Vorderansicht und im Querschnitt entlang der Linie VI-VI aus Fig. 1. Hier wird noch einmal deutlich, dass durch den besonderen Herstellvorgang ein dichter Formschluss zwischen Grundkörper 1 und Öffnungselement 2 erreichbar ist. Dadurch, dass der Grundkörper 1 beim Erstarren noch minimal schrumpft, wird eine optimale Dichtigkeit zwischen beiden Teilen erreicht.

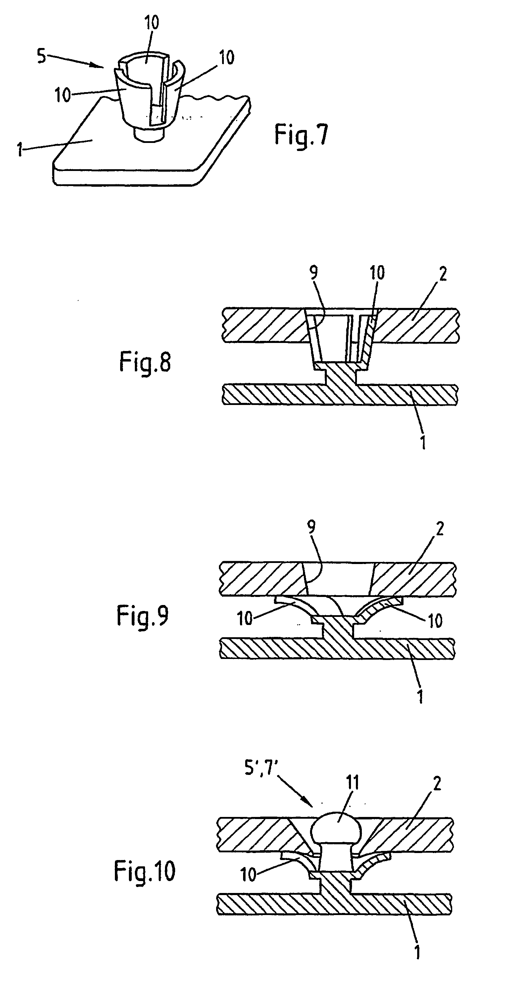

In Fig. 7 ist nun ein Ausführungsbeispiel eines Originalitätsverschlusses 5 in perspektivischer Ansicht - ohne Grundkörper - dargestellt. Seine Funktion kann den Fig. 8 und 9 entnommen werden, hier greifen konisch auseinanderlaufende Federn 10, im dargestellten und insofern bevorzugten Ausführungsbeispiel drei an der Zahl, in die ebenfalls konisch ausgebildete Öffnung 9 des Verschlussdeckels 2 ein, so dass beim erstmaligen Wiederverschließen ein Auseinanderbiegen der Federn 10 erfolgt und zu einer dauerhaften Verformung führt.

Schließlich ist in Fig. 10 eine alternative Ausführungsform eines Originalitätsverschlusses dargestellt, bei dem im Inneren der bereits erwähnten Federn 10 ein pilzartiger Kern 11 vorhanden ist, der mit entsprechend ausgestalteten Randbereichen der Öffnung 9 eine formschlüssige Verbindung darstellt, um neben der Funktion des Originalitätsverschlusses 5' auch noch die eines Rastelementes 7' zu erfüllen.

## Patentansprüche

1. Verfahren zur Herstellung eines zweiteiligen, wiederverschließbaren Ausgießelements für eine Flüssigkeitspackung, insbesondere Flachgiebelverbundpackung, wobei das Ausgießelement einen Grundkörper (1) und einen Verschlussdeckel (2) aufweist, wobei der Verschlussdeckel (2) mittels zweier Lagerzapfen (4) gelenkig am Grundkörper (1) angelenkt ist und eine Öffnung (9) zur Aufnahme eines Originalitätsverschlusses (5) aufweist, und wobei der Verschlussdeckel (2) zum Öffnen der Packung in das Packungsmaterial hinein schwenkbar ist, **gekennzeichnet durch** die folgenden Schritte:
- Spritzgießen des Verschlussdeckels (2) aus einem ersten Kunststoff,
- Drehen des Werkzeugs um einen vorgegebenen Winkel und Öffnen wenigstens eines Teils der Werkzeugform des Verschlussdeckels (2),
- Schließen einer zweiten Werkzeugform für den Grundkörper (1), deren Kavität wenigstens teilweise auch vom Verschlussdeckel (2) gebildet wird,
- Spritzgießen des Grundkörpers (1) aus einem zweiten Kunststoff, wobei in der Öffnung (9) des Verschlussdeckels (2) eine formschlüssige Verbindung entsteht, welche vom Verschlussdeckel (2) beim erstmaligen Öffnen der Packung nachhaltig verändert wird, und
- Öffnen der zweiten Werkzeugform und Entnahme des fertigen Ausgießelements.

2. Verfahren nach Anspruch 1,
**dadurch gekennzeichnet, dass** der Verschlussdeckel (2) zwei seitliche Hohlräume aufweist und beim Spritzgießen des Grundkörpers (1) die Lagerzapfen (4) in den im Verschlussdeckel (2) vorgesehenen Hohlräumen in situ entstehen.

3. Verfahren nach Anspruch 1,
**dadurch gekennzeichnet, dass** der Verschlussdeckel (2) zwei seitliche Lagerzapfen (4) aufweist, welche beim Spritzgießen des Grundkörpers (1) von diesem umgeben werden.

4. Verfahren nach einem der Ansprüche 1 bis 3,
**dadurch gekennzeichnet, dass** die Lagerzapfen (4) sich zu ihrem freien Ende hin konisch erweitern.

5. Wiederverschließbares Ausgießelement, aufweisend
einen Grundkörper (1) und einen Verschlussdeckel (2), wobei der Verschlussdeckel (2) mittels zweier Lagerzapfen (4) gelenkig am Grundkörper (1) angelenkt ist und eine Öffnung (9) zur Aufnahme eines Originalitätsverschlusses (5) aufweist, und wobei der Verschlussdeckel (2) zum Öffnen der Packung in das Packungsmaterial hinein schwenkbar ist,
**dadurch gekennzeichnet, dass** das zweiteilige Ausgießelement in einem einzigen Vorgang in zwei Schritten unmittelbar aufeinanderfolgend nach dem Verfahren eines der Ansprüche 1 bis 4 hergestellt ist,

6. Ausgießelement nach Anspruch 5,
**dadurch gekennzeichnet, dass** das Ausgießelement ein Rastelement (7) zum Verrasten von Grundkörper (1) und Verschlussdeckel (2) aufweist.

7. Ausgießelement nach Anspruch 6,
**dadurch gekennzeichnet, dass** der Originalitätsverschluss (5') gleichzeitig als Rastelement (7') ausgebildet ist.

8. Ausgießelement nach einem der Ansprüche 5 bis 7,
**dadurch gekennzeichnet, dass** der Grundkörper (1) wenigstens einen den Bereich seiner Ausgießöffnung (3) übergreifenden Steg (8) aufweist.

## Claims

1. A method for manufacturing a two-part, reclosable pouring element for a liquid package, particularly a flat gable composite package, the pouring element having a main body (1) and a sealing cover (2), the sealing cover (2) being linked to the main body (1) in an articulated way using two bearing pins (4) and having an opening (9) for receiving an originality seal (5), and the sealing cover (2) being pivotable into the package material to open the package,
**characterized by** the following steps:
- injection molding the sealing cover (2) from a first plastic,
- rotating the mold by a predefined angle and opening at least part of the mold of the sealing cover (2),
- closing a second mold for the main body (1), whose cavity is also at least partially formed by the sealing cover (2),
- injection molding the main body (1) from a second plastic, a positive connection arising in the opening (9) of the sealing cover (2), which is subsequently changed by the sealing cover (2) when the package is first opened, and
- opening the second mold and removing the finished pouring element.

2. The method according to Claim 1,
**characterized in that** the sealing cover (2) has two lateral cavities and the bearing pins (4) arise in situ in the cavities provided in the sealing cover (2) as the main body (1) is injection molded.

3. The method according to Claim 1,
**characterized in that** the sealing cover (2) has two lateral bearing pins (4) which are enclosed by the main body (1) as it is injection molded.

4. The method according to one of Claims 1 through 3,
**characterized in that** the bearing pins (4) expand conically toward their free end.

5. A reclosable pouring element, having a main body (1) and a sealing cover (2), the sealing cover (2) being linked onto the main body (1) in an articulated way using two bearing pins (4) and having an opening (9) for receiving an originality seal (5), and the sealing cover (2) being pivotable into the package material to open the package,
**characterized in that** the two-part pouring element is manufactured in one single procedure in two directly sequential steps according to the method according to one of Claims 1 through 4.

6. The pouring element according to Claim 5,
**characterized in that** the pouring element has a catch element (7) to lock the main body (1) and sealing cover (2).

7. The pouring element according to Claim 6,
**characterized in that** the originality seal (5') is simultaneously implemented as a catch element (7').

8. The pouring element according to one of Claims 5 through 7,
**characterized in that** the main body (1) has at least one bridge (8) which overlaps the region of its pouring opening (3).

## Revendications

1. Procédé pour fabriquer un élément verseur en deux parties, pouvant être refermé, pour un conditionnement de liquide, en particulier un conditionnement à couvercle plan, dans lequel l'élément verseur comprend un corps de base (1) et un couvercle (2) d'obturation, dans lequel le couvercle (2) d'obturation est amené par pivotement vers le corps de base (1) au moyen de deux tourillons (4) et présente une ouverture (9) pour recevoir un couvercle d'originalité (5), et dans lequel le couvercle (2) d'obturation peut pivoter vers le matériau de conditionnement pour ouvrir le conditionnement,
**caractérisé par** les étapes suivantes :
- mouler par injection le couvercle (2) d'obturation dans une première matière plastique,
- faire tourner l'outil d'un angle prédéterminé et ouvrir au moins une partie de la forme d'outil du couvercle (2) d'obturation,
- fermer une deuxième forme d'outil pour le corps de base (1), dont la cavité est constituée au moins partiellement aussi du couvercle (2) d'obturation,
- mouler par injection le corps de base (1) dans une deuxième matière plastique, dans lequel existe une liaison de complémentarité de forme dans l'ouverture (9) du couvercle (2) d'obturation qui est modifiée durablement lors de la première ouverture du conditionnement, et
- ouvrir la deuxième forme d'outil et retirer l'élément verseur ainsi obtenu.

2. Procédé selon la revendication 1, **caractérisé en ce que** le couvercle (2) d'obturation présente deux espaces creux latéraux et que lors du moulage par injection du corps de base (1) les tourillons (4) sont positionnés *in situ* dans les espaces creux prévus dans le couvercle (2) d'obturation.

3. Procédé selon la revendication 1, **caractérisé en ce que** le couvercle (2) d'obturation présente deux tourillons (4) latéraux qui lors du moulage p ar injection d u corps de base (1) sont entourés par celui-ci.

4. Procédé selon l'une des revendications 1 à 3, **caractérisé en ce que** les tourillons (4) s'élargissent en forme de cône en direction de leur extrémité libre.

5. Élément verseur pouvant être refermé, comprenant un corps de base (1) et un couvercle (2) d'obturation, dans lequel le couvercle (2) d'obturation est disposé à pivotement sur le corps de base (1) au moyen de deux tourillons (4) et présente une ouverture (9) pour recevoir un couvercle d'originalité (5), et dans lequel le couvercle (2) d'obturation peut pivoter vers le matériau de conditionnement pour ouvrir le conditionnement,
**caractérisé en ce que** l'élément verseur en deux parties est fabriqué par un procédé unique en deux étapes immédiatement consécutives selon le procédé de l'une des revendications 1 à 4.

6. Élément verseur selon la revendication 5, **caractérisé en ce que** l'élément verseur présente un élément (7) en forme de cliquet pour encliqueter le corps de base (1) et le couvercle (2) d'obturation.

7. Élément verseur selon la revendication 6, **caractérisé en ce que** le couvercle d'originalité (5') est conçu pour servir simultanément d'élément (7') en forme de cliquet.

8. Élément verseur selon l'une des revendications 5 à 7, **caractérisé en ce que** le corps de base (1) présente au moins une entretoise (8) qui s'étend par dessus le domaine de son ouverture (3) de versement.
